# EUROPÄISCHE PATENTSCHRIFT

(11) **EP 3 255 012 B1**
(45) Veröffentlichungstag und Bekanntmachung des Hinweises auf die Patenterteilung: **10.04.2019**
(21) Anmeldenummer: 17173979.0
(22) Anmeldetag: 01.06.2017
(51) Int. Cl.: B66F 9/075, B66F 9/08, B66F 9/06, B66F 9/14, B66F 17/00, B66F 9/07, B66F 9/10

(54) **FLURFÖRDERZEUG MIT EINER EINRICHTUNG ZUR REDUZIERUNG VON SCHWINGUNGEN**
INDUSTRIAL TRUCK COMPRISING A DEVICE FOR REDUCING VIBRATIONS
CHARIOT DE MANUTENTION COMPRENANT UN DISPOSITIF DE RÉDUCTION DE VIBRATIONS

(30) Priorität: 06.06.2016 DE 102016209893
(43) Veröffentlichungstag der Anmeldung: 13.12.2017
(73) Patentinhaber: Jungheinrich Aktiengesellschaft, 22047 Hamburg (DE)
(72) Erfinder: Dr. Schmalzl, Jürgen, 85778 Haimhausen (DE); Bibernell, Hubert, 84034 Landshut (DE); Schöttke, Carsten, 85368 Moosburg (DE); Dr. Magens, Ernst-Peter, 22949 Ammersbek (DE)
(74) Vertreter: Weickmann & Weickmann PartmbB

(56) Entgegenhaltungen:
- EP-A1- 2 368 832
- DE-A1- 10 240 851
- DE-A1-102004 045 698
- DE-U1-202015 004 375
- US-A1- 2009 312 875

## Beschreibung

Die Erfindung betrifft ein Flurförderzeug mit einem Chassis, einem an dem Chassis in aufrechter Position angeordneten Hubgerüst, einer Lasttragvorrichtung, welche wenigstens ein Lastaufnahmemittel zur Aufnahme einer zu transportierenden Last aufweist, einer die Lasttragvorrichtung an dem Hubgerüst abstützenden und gemeinsam mit der Lasttragvorrichtung an dem Hubgerüst auf- und abwärts bewegbaren Tragstruktur und mit einer Einrichtung zur Reduzierung von Schwingungen.

Flurförderzeuge nach der Erfindung können Gabelstapler diverser Bauarten sein, wobei die Erfindung mit besonderen Vorzügen Anwendung finden kann bei Seitenstaplern und Hochregalstaplerfahrzeugen, insbesondere bei Kommissionier-Dreiseitenstaplern, bei welchen Lasttraggabelzinken für Seitenschuboperationen quer zur Geradeausfahrtrichtung des Flurförderzeugs orientiert bzw. ausrichtbar sind. Mit solchen Seitenstaplern in ihrer Bauart als Hochregalstaplerfahrzeuge lässt sich das Ein-und Ausstapeln ganzer Paletten und das Kommissionieren einzelner Artikel aus dem Hochregal mühelos verbinden. Hochregalstaplerfahrzeuge der hier betrachteten Art umfassen solche, bei denen ein Fahrerplatz an dem Hubgerüst auf- und abwärts bewegbar mittels eines Fahrerplatzträgers angeordnet ist, wobei an dem Fahrerplatz in dessen Front ein Seitenschubrahmen vorgesehen ist, der zusammen mit dem Fahrerplatz an dem Hubgerüst auf-und abwärts bewegbar ist und eine seitlich quer zur Geradeausfahrtrichtung des Flurförderzeugs hin-und her bewegbare Lasttragvorrichtung trägt. Da der Fahrerplatz mit einer sich darauf befindenden Bedienungsperson zusammen mit der Lasttragvorrichtung vertikal am Hubgerüst verfahrbar ist, bezeichnet man derartige Flurförderzeuge auch als man-up-Fahrzeuge oder man-up-Flurförderzeuge. Bei verschiedenen Bautypen von man-up-Flurförderzeugen ist das Hubgerüst teleskopisch ausfahrbar und einziehbar, wobei der Fahrerplatz an der am höchsten ausfahrbaren Teleskopstufe des Hubgerüstes höhenverstellbar befestigt ist. Die an dem Seitenschubrahmen bewegbar geführte Lasttragvorrichtung kann ein Zusatzhubgerüst mit daran relativ zum Fahrerplatz auf-und abwärts bewegbaren Lastaufnahmemitteln umfassen, bei denen es sich üblicherweise um Lasttragzinken bzw. um eine Lasttraggabel mit solchen Lasttragzinken handelt. Das Zusatzhubgerüst ist an einem Schwenkschubgerät angeordnet und daran um eine üblicherweise vertikale Achse um ca. 180° schwenkbar, so dass die an dem Zusatzhubgerüst höhenverstellbar befestigte Lasttraggabel aus einer Stellung mit Ausrichtung seitlich quer zur Geradeausfahrtrichtung des Flurförderzeugs in eine Stellung mit entgegengesetzter seitlicher Ausrichtung verschwenkt werden kann. Das Schwenkschubgerät ist an dem Seitenschubrahmen linear geführt.

Eine typische Aufgabe für das Flurförderzeug besteht zum Beispiel darin, eine Palette mit darauf befindlicher Last in ein Regal einzulagern, wobei sich das Flurförderzeug in einem Schmalgang zwischen Regalen eines Hochregallagers befindet und die Palette auf der Lasttraggabel aufgenommen ist. Das Einschieben der Palette in das Regal erfolgt seitlich quer zur Geradeausfahrtrichtung (normale Hauptfahrtrichtung) des Flurförderzeugs, wobei vorausgesetzt sei, dass die Lasttraggabel bereits seitlich zu dem Regal hin korrekt auf den gewünschten Lagerplatz ausgerichtet ist und sich das Schwenkschubgerät mit dem daran vorgesehenen Zusatzhubgerüst in einer seitlichen Endstellung an dem vom betreffenden Regal entfernten Ende des Seitenschubrahmens befindet. Durch lineares seitliches Verschieben des Schwenkschubgerätes entlang des Seitenschubrahmens kann dann die beladene Palette in das Regal eingeführt werden.

Zum Antreiben der verschiedenen bewegbaren Komponenten an dem Hubgerüst sind verschiedene steuerbare Antriebsmittel vorgesehen. Sie dienen je nach Ausstattung des Flurförderzeugs zum Bewegen der Lastaufnahmemittel am Zusatzhubgerüst, zum Schwenken des Zusatzhubgerüstes um eine Hochachse, zum Bewegen der Lasttragvorrichtung bzw. des Schwenkschubgerätes an dem Seitenschubrahmen, zum Bewegen des Fahrerstandes am Hubgerüst und ggf. zum teleskopischen Ausfahren und Einziehen des Hubgerüstes sowie zum Bewegen des Seitenschubrahmens relativ zum Fahrerplatz. Üblicherweise und vorzugsweise handelt es sich dabei um hydraulische Antriebsmittel, wobei jedoch andere Antriebe nicht ausgeschlossen sein sollen.

Es ist ein bekanntes Problem, dass bei Flurförderzeugen der hier betrachteten Art Schwingungen am Hubgerüst, insbesondere Schwingungen mit seitlichen, d.h. quer zur Geradeausfahrtrichtung des Flurförderzeuges gerichteten Schwingungskomponenten auftreten, insbesondere bei Fahrt auf unebenem Fahruntergrund. Solche Schwingungen sind oft umso heftiger je höher der Fahrerplatz und seine Vorbaugeräte am Hubgerüst angehoben sind und je größer die mittels der Lasttragvorrichtung ggf. aufgenommene Last ist. Solche Schwingungsbewegungen können für eine auf dem Fahrerplatz befindliche Bedienungsperson unangenehm sein und machen die schnelle Fahrt im Schmalgang sowie das Einlagern und Auslagern von Paletten in-und aus Regalen schwierig oder gar zeitweise unmöglich, so dass die Bedienungsperson einen Einlagerungs -oder Auslagerungsvorgang erst dann sicher einleiten kann, wenn die Schwingungen bei stehendem Flurförderzeug abgeklungen sind. Alternativ könnte die Bedienungsperson das Flurförderzeug bei Fahrt auf unebenem Boden grundsätzlich mit reduzierter Geschwindigkeit fahren, um Schwingungsanregungen weitestgehend zu vermeiden. Beides würde jedoch die Produktivität bei der Arbeit mit dem Flurförderzeug senken.

Aus der EP 2 368 832 B1 ist ein als man-up-Fahrzeug ausgebildetes Flurförderzeug der eingangs genannten Art bekannt, bei dem bereits Maßnahmen zur Schwingungsreduzierung getroffen wurden. Diese Maßnahmen bestehen darin, dass eine als Lastaufnahmeabschnitt bezeichnete, am Hubgerüst auf-und ab bewegbare, den Fahrerplatz und die damit verbundene Lasttragvorrichtung zusammenhängend umfassende Baugruppe so an dem Hubgerüst angebracht ist, dass sie insgesamt quer zur Geradeausfahrtrichtung (Hauptfahrtrichtung) des Flurförderzeugs Bewegungen mit einer seitlichen, d.h. normalerweise horizontalen Bewegungskomponente relativ zu dem Hubgerüst ausführen kann, wobei hierzu ein gesonderter, nicht für den planmäßigen Betrieb des Flurförderzeugs vorgesehener Bewegungsfreiheitsgrad für die Baugruppe eingerichtet ist. Das bekannte Flurförderzeug weist Mittel zum Dämpfen oder Vermeiden von Schwingungen in der relativen Lage zwischen dem Lastaufnahmeabschnitt und dem Hubgerüst, d.h. zwischen dem Fahrerplatz und dem Hubgerüst, auf. Dabei kann es sich um aktive, semi-aktive und/oder passive Schwingungsdämpfungsmittel handeln, die geeignet sind, eine Kraft oder ein Moment zwischen dem Hubgerüst und dem Lastaufnahmeabschnitt zu erzeugen, die bzw. das eine Komponente entlang des gesonderten, nicht für den planmäßigen Betrieb des Flurförderzeugs vorgesehenen Bewegungsfreiheitsgrades hat. In der EP 2 368 832 B1 sind zur Schwingungsreduzierung u.a. Dämpfungselemente und Federn vorgeschlagen, die einer Auslenkung des Hubgerüstes und der als Lastaufnahmeabschnitt bezeichneten Baugruppe entlang des gesonderten Bewegungsfreiheitsgrades entgegenwirken. Nachteilig an dieser bekannten Lösung ist ein relativ großer Montageaufwand, um die komplette Baugruppe aus Fahrerplatz und allen gemeinsam damit am Hubgerüst vertikal verfahrbaren Lastaufnahmekomponenten unter Einrichtung des gesonderten, nicht für den planmäßigen Betrieb des Flurförderzeugs vorgesehenen Bewegungsfreiheitsgrades an dem Hubgerüst anzubringen. Auch das Nachrüsten eines betreffenden Flurförderzeugs mit diesen bekannten schwingungsreduzierenden Maßnahmen würde sich kompliziert und aufwendig gestalten.

Die Schrift DE 102 40 851 A1 offenbart ein Flurförderzeug mit einem Chassis, einem am Chassis in aufrechter Position angeordneten Hubgerüst, einer Lasttragvorrichtung, welche wenigstens ein Lastaufnahmemittel zur Aufnahme einer zu transportierenden Last aufweist, einer die Lasttragvorrichtung an dem Hubgerüst abstützenden und gemeinsam mit der Lasttragvorrichtung an dem Hubgerüst auf- und abwärts bewegbaren Tragstruktur, und mit einer Einrichtung zur Reduzierung von Schwingungen, wobei die Einrichtung zur Reduzierung von Schwingungen wenigstens einen vom Hubgerüst getragenen Zusatzmassekörper aufweist, der weder mit dem Hubgerüst noch mit der Tragstruktur noch mit der Lasttragvorrichtung stets starr gekoppelt ist, sondern vermittels einer Lageranordnung derart beweglich gelagert ist, dass er in Reaktion auf Hubgerüstschwingungen, insbesondere solche mit horizontalen Schwingungskomponenten relativ zum Hubgerüst bewegbar ist, um Hubgerüstschwingungen entgegenzuwirken.

Der Erfindung liegt die Aufgabe zu Grunde, ein Flurförderzeug der eingangs genannten Art bereitzustellen, welches mit montagetechnisch relativ einfach insbesondere auch im Nachrüstfall zu realisierenden schwingungsreduzierenden Maßnahmen ausgestattet ist, die einen effizient schwingungsreduzierten Betrieb ermöglichen.

Erfindungsgemäß wird ein Flurförderzeug mit den Merkmalen des Patentanspruchs 1 vorgeschlagen, nämlich ein Flurförderzeug mit einem Chassis, einem an dem Chassis in aufrechter Position angeordneten Hubgerüst, einer Lasttragvorrichtung, welche wenigstens ein Lastaufnahmemittel zur Aufnahme einer zu transportierenden Last aufweist, einer die Lasttragvorrichtung an dem Hubgerüst abstützenden und gemeinsam mit der Lasttragvorrichtung an dem Hubgerüst auf- und abwärts bewegbaren Tragstruktur, und mit einer Einrichtung zur Reduzierung von Schwingungen, wobei die Einrichtung zur Reduzierung von Schwingungen wenigstens einen vom Hubgerüst getragenen Zusatzmassekörper aufweist, der weder mit dem Hubgerüst noch mit der Tragstruktur noch mit der Lasttragvorrichtung stets starr gekoppelt ist, sondern vermittels einer Lageranordnung derart beweglich gelagert ist, dass er in Reaktion auf Hubgerüstschwingungen, insbesondere auf solche mit horizontalen Schwingungskomponenten relativ zum Hubgerüst bewegbar ist, um den Hubgerüstschwingungen entgegenzuwirken.

Unter Zusatzmassekörper ist im Rahmen der Erfindung ein Massekörper zu verstehen, der Komponente der Einrichtung zur Reduzierung von Schwingungen ist; also bei entsprechenden Flurförderzeugen ohne eine solche Einrichtung zur Reduzierung von Schwingungen keine Bedeutung hat und daher dort in entsprechender Funktion auch nicht vorgesehen ist.

Ein Grundgedanke der Erfindung besteht darin, den Zusatzmassekörper, d.h. dessen Masse, und das Restfahrzeug, das heißt dessen Masse, nicht starr miteinander zu koppeln, so dass der Zusatzmassekörper beschleunigten Bewegungen, wie sie bei Hubgerüstschwingungen auftreten, vorzugsweise nur indirekt, verzögert und phasenverschoben folgen kann und dabei Bewegungsenergie in eine andere Energieform, insbesondere Wärme, umgewandelt wird, um den Hubgerüstschwingungen entgegenzuwirken.

Der Zusatzmassekörper ist vorzugsweise aus wenigstens einem Metallblock, z.B. Stahlblock, gebildet, der bei möglichst wenig Platzbedarf eine relativ große Masse von z.B. mindestens 50 kg, vorzugsweise mindestens 100 kg hat.

Der Zusatzmassekörper und die ihn relativ zum Hubgerüst und den damit in Verbindung stehenden Komponenten bewegbar lagernde Lageranordnung können bei unterschiedlichen Ausführungsformen der Erfindung an unterschiedlichen Stellen vorgesehen sein.

So können die Lageranordnung und der Zusatzmassekörper gemäß einem Ausführungsbeispiel der Erfindung unmittelbar an dem Hubgerüst, vorzugsweise an einer Stelle in der oberen Hälfte des Hubgerüstes -, insbesondere am oberen Ende des Hubgerüstes angeordnet sein. Im Falle eines teleskopisch ausfahrbaren Hubgerüstes sollten die Lageranordnung und der Zusatzmassekörper an der am weitesten nach oben ausfahrbaren Teleskopstufe des Hubgerüstes angeordnet und mit dieser vertikal verfahrbar sein.

Gemäß einem weiteren Ausführungsbeispiel der Erfindung können die Lageranordnung und der Zusatzmassekörper von der Tragstruktur getragen - und mit dieser an dem Hubgerüst auf- und abwärts bewegbar sein. Dabei kann die Lageranordnung mit dem Zusatzmassekörper unmittelbar an der Tragstruktur oder an einer sonstigen von der Tragstruktur gehaltenen Komponente, beispielsweise an der Lasttragvorrichtung, vorgesehen sein. Im Falle eines man-up-Flurförderzeugs mit einem an der Tragstruktur zur gemeinsamen Auf- und Abwärtsbewegung damit befestigten Fahrerplatz kann der Fahrerplatz, insbesondere dessen Rahmen eine solche Komponente sein. Günstig unterzubringen ist eine solche Lageranordnung mit Zusatzmassekörper beispielsweise im Bodenbereich des Fahrerplatzes, vorzugsweise unter dem Fahrerplatz.

Gemäß einer besonders bevorzugten Ausführungsform der Erfindung ist das Flurförderzeug als Seitenstapler, insbesondere als Dreiseitenstapler ausgebildet, wobei die Tragstruktur einen Seitenschubrahmen aufweist, an welchem ein mit der Lasttragvorrichtung verbundenes Seitenschubgerät zur gemeinsamen Bewegung mit der Lasttragvorrichtung seitlich quer zur normalen Geradeausfahrtrichtung des Flurförderzeugs gelagert und mittels einer Seitenschubantriebsvorrichtung antreibbar ist, wobei die den Zusatzmassekörper relativ zum Hubgerüst beweglich lagernde Lageranordnung und der Zusatzmassekörper vorzugsweise an dem Seitenschubrahmen angeordnet sind. Wie oben schon dargelegt, kommen jedoch alternativ oder zusätzlich auch andere Stellen für die Positionierung der Lageranordnung mit Zusatzmassekörper in Frage.

Die Lageranordnung ist gemäß einer bevorzugten Ausführungsform der Erfindung eine Linearlageranordnung, welche eine horizontale Bewegung des Zusatzmassekörpers vorzugsweise quer zur normalen Hauptfahrtrichtung des Flurförderzeugs ermöglicht, um insbesondere Querschwingungen des Hubgerüstes, also Schwingungen mit horizontalen Schwingungskomponenten quer zur normalen Hauptfahrtrichtung des Flurförderzeugs zu reduzieren. Dabei kann es sich um ein Gleitlager, Rollenlager und dgl. handeln.

Bei einer weiteren Ausführungsform der Erfindung umfasst die Lageranordnung ein Pendellager, welches eine Pendelbewegung des Zusatzmassekörpers vorzugsweise in einer Ebene quer zur normalen Geradeausfahrtrichtung des Flurförderzeugs ermöglicht. Der Zusatzmassekörper bildet dabei den Hauptteil der Pendelmasse.

Endanschläge können vorgesehen sein, um den Bewegungsbereich des Zusatzmassekörpers relativ zum Hubgerüst zu begrenzen. Auch können passive oder/und aktiv betreibbare Rückstellmittel vorgesehen sein, die dazu dienen, den Zusatzmassekörper in eine Soll-Nullposition (Mittenposition) zurück bewegen, falls er außerhalb dieser Soll-Nullposition am Ende eines Schwingungsreduzierungsvorgangs stoppen sollte.

Die Einrichtung zur Reduzierung von Schwingungen weist vorzugsweise ein die Bewegung des Zusatzmassekörpers relativ zum Hubgerüst beeinflussendes passives oder/und aktives Dämpfungssystem auf. Dies kann in einem sehr einfachen Fall eines passiven Dämpfungssystems ein Reibungsdämpfungssystem mit einer Reibungsdämpfungsanordnung sein, welche eine bremsende Wirkung auf Bewegungen des Zusatzmassekörpers relativ zum Hubgerüst hat. Reibungsdämpfungsanordnungen sind in diversen Ausführungsformen realisierbar, etwa indem eine erhöhte Lagerreibung in der Lageranordnung des Zusatzmassekörpers vorgesehen wird.

Gemäß einer Ausführungsform der Erfindung umfasst das Dämpfungssystem wenigstens einen hydraulischen oder/und pneumatischen Reibungsdämpfungszylinder. Ein solcher Reibungsdämpfungszylinder mit zwei durch einen axial darin verschiebbaren Kolben separierten Zylinderkammern kann hydraulisch z.B. so beschaltet sein, dass die beiden Zylinderkammern über eine hydraulische Drosselstelle kurzgeschlossen sind. Ein solcher Reibungsdämpfungszylinder kann ferner z.B. mit einer hydropneumatischen Federspeicheranordnung kombiniert sein, welche einer Auslenkung des Kolbens des Reibungsdämpfungszylinders aus einer Nulllage heraus entgegenwirkt.

Es ist allgemein bei derartigen Dämpfungssystemen, insbesondere Reibungsdämpfungssystemen vorteilhaft, wenn sie wenigstens eine Federanordnung aufweisen, die dazu eingerichtet ist, den Zusatzmassekörper bei dessen Auslenkung aus einer Soll-Nulllage heraus in Richtung hin zur Soll-Nulllage zurückzudrängen. Eine solche Federanordnung kann z.B. wenigstens eine mechanische Feder oder/ und, wie oben schon erwähnt, wenigstens einen hydropneumatischen Federspeicher umfassen.

Sollte eine Bewegung des Zusatzmassekörpers relativ zum Hubgerüst bis zum Stillstand außerhalb der Soll-Nullposition durch Reibung (oder ggf. an einem Anschlag) gebremst werden, so könnte die betreffende Reibungsbremse dann ggf. gelüftet werden, so dass der Zusatzmassekörper mittels Federkraft oder und durch einen Stellantrieb ohne besonders großen Kraftaufwand wieder in die Soll-Nullposition gebracht werden kann.

Gemäß einer weiteren Ausführungsform der Erfindung umfasst das Dämpfungssystem wenigstens eine aktive Komponente, insbesondere wenigstens einen steuerbaren hydraulischen oder/und pneumatischen Zylinder oder/und wenigstens einen steuerbaren Elektromotor, vorzugsweise Servomotor, oder/und wenigstens einen Elektromagneten, wobei die aktive Komponente des Dämpfungssystems dazu eingerichtet ist, den Zusatzmassekörper in einer Hubgerüstschwingungen reduzierenden Weise aktiv zu bewegen. Gemäß einer Ausführungsform der Erfindung wird die zur Schwingungsreduzierung vom Hubgerüst und den damit in Verbindung stehenden Komponenten entkoppelte bzw. nicht starr und in diesem Sinne "weich" damit gekoppelte Masse des Zusatzmassekörpers dabei aktiv und dynamisch tendenziell in ihrer Nullposition gehalten.

Eine Steuerungseinrichtung ist in einem aktiven System vorgesehen, um die aktive(n) Komponente(n) zu steuern. Ferner können Sensoren vorgesehen sein, die Schwingungsamplituden des Hubgerüstes oder/und daran höhenbeweglich angeordneter Komponenten erfassen, wobei die Steuerungseinrichtung Daten dieser Sensoren verarbeiten kann, um die aktive(n) Komponente(n) im Sinne einer optimierten Schwingungsreduzierung zu steuern. In diesem Sinne kann auch wenigstens ein Sensor vorgesehen sein, der die Relativbewegung des Zusatzmassekörpers relativ zu dessen Lageranordnung oder zum Hubgerüst und den damit in Verbindung stehenden Komponenten erfasst.

Die Einrichtung zur Reduzierung von Schwingungen kann gemäß einer Ausführungsform der Erfindung wahlweise aktivierbar und deaktivierbar sein. Hierzu kann beispielsweise eine steuerbare Verriegelungsvorrichtung vorgesehen sein, welche den Zusatzmassekörper im deaktivierten Zustand der Einrichtung zur Reduzierung von Schwingungen im Wesentlichen starr mit der Lageranordnung relativ zum Hubgerüst und den damit in Verbindung stehenden Komponenten koppelt, und welche den Zusatzmassekörper aus der starren Kopplung freigibt, wenn die Einrichtung zur Reduzierung von Schwingungen aktiviert wird.

Bei einer besonders vorteilhaften Variante einer solchen Ausführungsform der Erfindung ist die Einrichtung zur Reduzierung von Schwingungen in Abhängigkeit vom jeweiligen Betriebszustand des Flurförderzeugs oder/und in Abhängigkeit vom Aufenthalt des Flurförderzeugs in bestimmten Umgebungen, z. B. in einem Schmalgang, automatisch aktivierbar bzw. deaktivierbar. So kann die Steuerung der Einrichtung zur Reduzierung von Schwingungen mittels einer Steuereinrichtung z.B. in Abhängigkeit von der Fahrbeschleunigung (auch Querbeschleunigung) oder/und Fahrgeschwindigkeit des Flurförderzeugs, von der jeweiligen Hubhöhe der Tragstruktur bzw. der Lasttragvorrichtung, von der Masse der vom Flurförderzeug aufgenommenen Last, von der Ausrichtung von Lasttraggabelzinken, von Stößen, etwa bei Fahrbahnunebenheiten, vom Aufenthaltsort bzw. von der Umgebung des Flurförderzeugs, etwa wenn sich dieses in einem Schmalgang eines Hochregallagers befindet, usw. erfolgen, wobei Sensoren oder sonstige Erfassungsmittel zur Erfassung dieser Parameter vorgesehen sind, die mit der die Einrichtung zur Reduzierung von Schwingungen steuernden Steuereinrichtung des Flurförderzeugs zusammenwirken. So kann es beispielsweise vorgesehen sein, dass die Steuereinrichtung die "Starrheit bzw. Härte" der Kopplung zwischen dem Zusatzmassekörper und der Lageranordnung bzw. dem mit der Lageranordnung fest verbundenen Element des Flurförderzeugs in Abhängigkeit von einem oder mehreren der vorstehend genannten Parameter ändert. Je weniger Schwingungsreduzierungsbedarf gegeben ist, desto starrer bzw. härter kann diese Kopplung eingestellt werden.

Soll die Einrichtung zur Reduzierung von Schwingungen beispielsweise nur zur Reduzierung von Querschwingungen wirksam werden, so kann es vorgesehen sein, dass sie in Abhängigkeit von der Ausrichtung von Lasttraggabelzinken oder/und in Abhängigkeit von der Hubhöhenstellung der Lasttraggabelzinken oder/und nur bei Aufenthalt des Flurförderzeugs im Schmalgang steuerbar ist, so dass sie beispielsweise im Schmalgang bei Querstellung der Lasttraggabelzinken relativ zur Geradeausfahrtrichtung des Flurförderzeugs wirksam ist.

Ausführungsbeispiele der Erfindung werden nachstehend unter Bezugnahme auf die Figuren erläutert.
Figur 1 zeigt in einer Seitenansicht ein Ausführungsbeispiel eines Flurförderzeugs nach der Erfindung, welches als Dreiseiten-Hochregalstapler ausgebildet ist.
Figur 2a und Figur 2b zeigen in einer Rückansicht (Figur 2a) und einer perspektivischen Ansicht (Figur 2b) einen Seitenschubrahmen eines Flurförderzeugs der in Figur 1 dargestellten Bauweise mit einem an dem Seitenschubrahmen vorgesehenen Zusatzmassekörper mit Federzentrierung in einem linearen Gleitlager.
Figur 3 zeigt in einer Rückansicht einen entsprechenden Seitenschubrahmen mit einem daran vorgesehenen Zusatzmassekörper, dessen Bewegung in einem linearen Gleitlager elektromagnetisch beeinflussbar ist.
Figur 4 zeigt in einer perspektivischen Darstellung einen Fahrerplatzrahmen eines Flurförderzeugs der in Figur 1 dargestellten Bauweise mit einem im Bodenbereich des Fahrerplatzrahmens vorgesehenen Zusatzmassekörper.

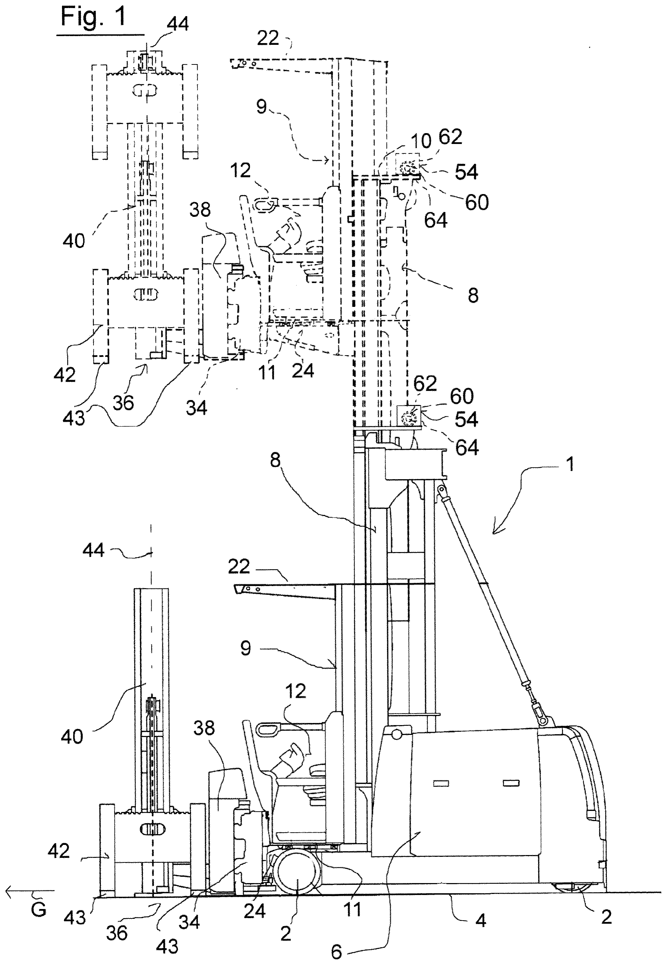

Das als Dreiseiten-Hochregalstapler ausgebildete Flurförderzeug weist gemäß Figur 1 ein über Räder 2 am Fahruntergrund 4 abgestütztes Chassis 6 und ein an dem Chassis 6 aufrecht stehend befestigtes Hubgerüst 8 auf. Das Hubgerüst 8 ist mehrteilig teleskopisch ausfahrbar, wie dies in Figur 1 anhand der mit gestrichelten Linien gezeigten Ausfahrstellung zu erkennen ist. An der am weitesten ausfahrbaren Teleskopstufe 10 des Hubgerüstes 8 ist eine Tragstruktur 9 als Fahrerplatzträger vertikal verfahrbar angebracht. Die Tragstruktur 9 weist eine vom Hubgerüst 8 in Hauptfahrtrichtung G des Flurförderzeugs nach vorn abstehende Kragträgeranordung 24 als Ausleger auf, die eine Plattform 11 eines Fahrerplatzes 12 an deren Unterseite abstützt und die und an ihrem abstehenden Ende einen Seitenschubrahmen 34 trägt.

Der Fahrerplatz 12 ist als hebbare Fahrerkabine ausgestaltet, die einen Rahmen mit der Fahrerplatzplattform 11 als Kabinenboden, eine Rückwand, Wangen und ein Fahrerschutzdach 22 aufweist. In Front des Fahrerplatzes 12 ist an der Kragträgeranordung 24 der Seitenschubrahmen 34 befestigt.

Ein Seitenschubgerät 38 in der Bauform als Schwenkschubgerät ist seitlich quer zur Geradeausfahrtrichtung G des Flurförderzeugs verschiebbar an dem Seitenschubrahmen 34 angeordnet. Das Seitenschubgerät 38 ist mit einer Lasttragvorrichtung 36 verbunden, die ein vorne an dem Seitenschubgerät 38 angeordnetes Zusatzhubgerüst 40 aufweist, an welchem als Lastträgerelement eine Lasttraggabel 42 mit einer Gabelträgeranordnung vertikal verfahrbar ist. Das Zusatzhubgerüst 40 ist zusammen mit der Lasttraggabel 42 um die Hochachse 44 zwischen der in Fig.1 gezeigten Stellung mit seitlicher Ausrichtung der Lasttraggabel 42 bzw. deren Lasttragzinken 43 (Querausrichtung nach links in bezug auf die Geradeausfahrtrichtung G) und einer Stellung mit entgegengesetzter seitlicher Ausrichtung (Querausrichtung nach rechts) der Lasttragzinken 43 schwenkbar.

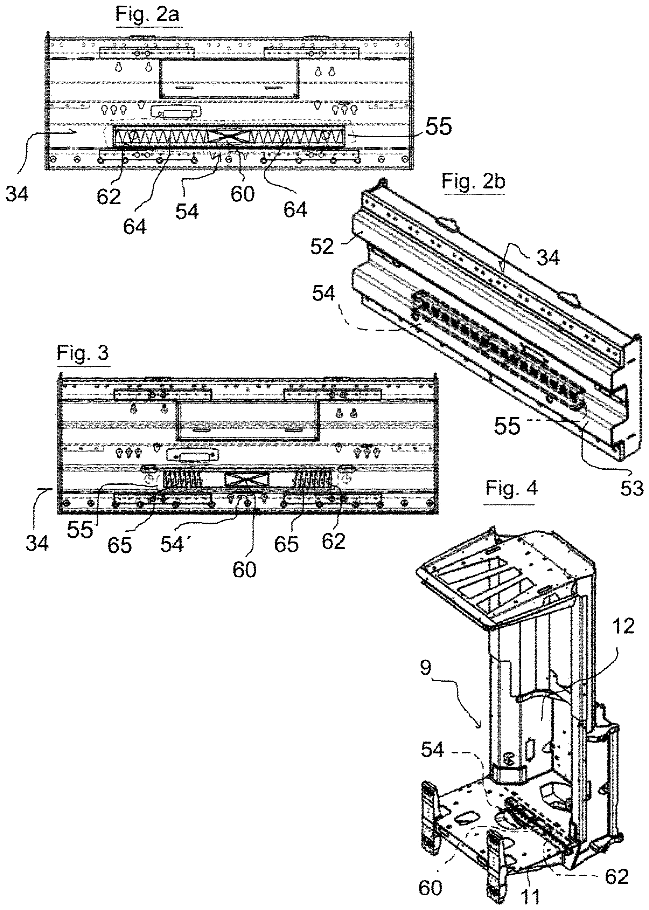

Besonderheit des Flurförderzeugs ist eine Einrichtung 54 zur Reduzierung von Schwingungen, welche insbesondere dazu eingerichtet ist, Schwingungen mit Horizontalauslenkungskomponenten quer zur Hauptfahrtrichtung G des Flurförderzeugs zu reduzieren bzw. zu dämpfen. In dem Ausführungsbeispiel gemäß Figur 1 ist die Einrichtung 54 zur Reduzierung von Schwingungen am oberen Rand der am weitesten ausfahrbaren Teleskopstufe 10 des Hubgerüstes 8 fest angeordnet. Sie ist in Figur 1 rein schematisch angedeutet und umfasst im einfachsten Fall als Lageranordnung 62 ein lineares Gleitlager mit einem davon zur Bewegung quer zur Hauptfahrtrichtung G des Flurförderzeugs horizontal bewegbar geführten Zusatzmassekörper 60 und ein die Bewegung des Zusatzmassekörpers 60 relativ zum Hubgerüst 8 beeinflussendes Schwingungsdämpfungssystem. Die Einrichtung 54 zur Reduzierung von Schwingungen kann prinzipiell z.B. so ausgestaltet sein, wie es nachstehend noch unter Bezugnahme auf die Figuren 2a bis 4 erläutert wird.

Der Zusatzmassekörper 60 kann und sollte eine durchaus erhebliche Masse von beispielsweise mindestens 50 kg, vorzugsweise mindestens 100 kg, aufweisen, um eine effiziente Gegenschwungmasse bei Auftreten von Hubgerüstschwingungen darzustellen. Er besteht zweckmäßigerweise aus einem Material großer Dichte, um das Volumen und den Platzbedarf dafür möglichst gering zu halten. Gemäß einer Ausführungsform der Erfindung besteht der Zusatzmassekörper aus wenigstens einem Metallblock.

Die Lageranordnung 62 kann zum Beispiel als Gleitlager oder/und als Rollenlager usw. ausgebildet sein und bildet als Teil der Einrichtung 54 zur Reduzierung von Schwingungen eine Schnittstelle zwischen dem Zusatzmassekörper und dem Hubgerüst 8, welche Schwingungsreduzierungsbewegungen des Zusatzmassekörpers 60 relativ zum Hubgerüst 8 mit Horizontalbewegungskomponenten quer zur Hauptfahrtrichtung (Geradeausfahrtrichtung) G des Flurförderzeugs ermöglicht.

Das im einfachsten Fall passive Schwingungsdämpfungssystem kann in anderen Ausgestaltungen aktiv oder semiaktiv ausgestaltet sein.

Es umfasst zumindest in der passiven Variante vorzugsweise eine Reibungsdämpfungsanordnung, welche eine bremsende Wirkung auf die Bewegung des Zusatzmassekörpers relativ zum Hubgerüst 8 hat, um Bewegungsenergie in eine andere Energieform, insbesondere Wärme, umzuwandeln, so dass eine Schwingungsdämpfung von Schwingungen des Flurförderzeugs, insbesondere des Hubgerüstes 8 stattfindet. Eine solche Reibungsdämpfungsanordnung kann zum Beispiel mit Reibbelägen versehene, aneinander reibende Reibflächen umfassen. Auch ein hydraulischer Zylinder mit beispielsweise über eine Drosselstelle kurzgeschlossenen Zylinderkammern und gegebenenfalls einem damit verbundenen pneumatischen oder hydropneumatischen Federspeicher kann Element des Dämpfungssystems sein. Das Dämpfungssystem kann in bevorzugter Ausgestaltung eine Federanordnung, zum Beispiel mechanische Federanordnung, umfassen, welche einer Auslenkung des Zusatzmassekörpers relativ zu der Lageranordnung und dem Hubgerüst mit elastischer Rückstelltendenz entgegenwirkt.

Es sei darauf hingewiesen, dass gemäß Varianten des Dämpfungssystems die Steifigkeit von Federanordnungen des Dämpfungssystems oder/und die Reibungswirkung von Reibungsdämpfungsanordnungen von bestimmten Betriebsparametern oder Betriebsbedingungen des Flurförderzeugs abhängig steuerbar sein können, um die Schwingungsdämpfungswirkung bedarfsweise zu modulieren.

Ein Anwendungsbeispiel: Während der Fahrt des Flurförderzeugs in einem Schmalgang eines Hochregallagers sei die Einrichtung zur Reduzierung von Schwingungen beispielsweise aktiviert, wobei eine Reibungsdämpfungsanordnung des Dämpfungssystems eine der aktuellen Situation angepasste Reibungswirkung bereitstellt. Kommt es bei Fahrt des Flurförderzeugs über Bodenunebenheiten zu einer Querbeschleunigung am Hubgerüst 8 und damit an dem Zusatzmassekörper, so wird über die Lageranordnung, die Reibungsdämpfungsanordnung und eine damit zusammenwirkende Federanordnung des Dämpfungssystems die Querbeschleunigung auf den Zusatzmassekörper übertragen. Überschreitet die Trägheitskraft der betreffenden "entkoppelten bzw. weich gekoppelten" Massen den Wert der eingestellten Reibkraft und der parallel wirkenden Federkraft, so kommt es zu einer Relativbewegung zwischen dem Zusatzmassekörper und dessen Lageranordnung bzw. dem Hubgerüst 8. Diese relativ zu einer Soll-Nullposition hin-und hergehende Relativbewegung reduziert die Gesamt-Schwingungsamplitude des Hubgerüstes 8, und es wird kinetische Energie in der Reibungsdämpfungsanordnung vorwiegend in Wärme umgewandelt.

Das Dämpfungssystem kann in einer entsprechenden Variante zusätzlich oder alternativ zu passiven Komponenten wenigstens ein Stellglied als aktive Komponente aufweisen. Ein solches Stellglied kann zum Beispiel von einem steuerbaren hydraulischen oder pneumatischen Zylinder oder von einen steuerbaren Elektromotor oder von einer Elektromagnetanordnung gebildet sein, und ist zwischen dem Zusatzmassekörper und der ihn lagernden Lageranordnung bzw. dem Hubgerüst 8 wirksam, um den Zusatzmassekörper 60 bei Auslenkung aus seiner Soll-Nullstellung zurückzudrängen.

Eine Steuereinrichtung ist in einem solchen aktiven System vorgesehen, um die aktiven Komponenten zu steuern. Ferner können Sensoren vorgesehen sein, die Schwingungsamplituden des Hubgerüstes oder daran höhenbeweglich angeordneter Komponenten erfassen, wobei die Steuerungseinrichtung Daten dieser Sensoren verarbeiten kann, um die aktiven Komponenten im Sinne einer optimierten Schwingungsreduzierung zu steuern. In diesem Sinne können auch Sensoren vorgesehen sein, die die Relativbewegung des Zusatzmassekörpers zu der ihn lagernden Lageranordnung bzw. zum Hubgerüst 8 erfassen.

In den Figuren 2a und 2b ist der Seitenschubrahmen 34 eines Flurförderzeugs der in Figur 1 gezeigten Bauart isoliert dargestellt. Ein entsprechendes, damit ausgerüstetes Flurförderzeug stellt eine weitere Ausführungsform der Erfindung insofern dar, als die Einrichtung 54 zur Reduzierung von Schwingungen an dem Seitenschubrahmen 34 vorgesehen bzw. in diesen integriert ist. In diesem Fall ist die Einrichtung 54 zur Reduzierung von Schwingungen zusammen mit dem Seitenschubrahmen 34 und der Tragstruktur 9 am Hubgerüst vertikal verfahrbar.

Der Seitenschubrahmen 34 weist übereinander angeordnete, nach vorne abstehende und horizontal quer zur normalen Hauptfahrtrichtung G des Flurförderzeugs verlaufende horizontale Querschienen 52, 53 auf, wobei in einem Hohlraum 55 der unteren Querschiene 53 die Einrichtung 54 zur Reduzierung von Schwingungen untergebracht ist. Davon ist in Figur 2a in dem teilweise nach hinten hin offenen dargestellten Hohlraum 55 ein Zusatzmassekörper 60 in einem linearen Gleitlager 62 zu erkennen, welches eine Relativbewegung des Zusatzmassekörpers 60 längs der unteren Querschiene 53 relativ zu dem Seitenschubrahmen 34 ermöglicht. Der Zusatzmassekörper 60 und das Gleitlager 62 sind mit einander berührenden Reibbelägen versehen, so dass der Zusatzmassekörper 60 bei seinen im Falle von Hubgerüst-Querschwingungen ausgelösten Bewegungen im Gleitlager 62 eine Bremswirkung durch Reibung erfährt. Dadurch wird erreicht, dass Bewegungsenergie in Wärme umgesetzt wird.

Gemäß Figur 2a befindet sich der Zusatzmassekörper 60 in einer Soll-Nullposition (Mittenposition), die er im Normalfall bei Abwesenheit von Hubgerüstschwingungen einnimmt. Beiderseits des Zusatzmassekörpers 60 sind mechanische Rückstellfedern 64 in dem Gleitlager 62 vorgesehen, die sich mit ihren axialen Enden einerseits am Zusatzmassekörper 60 und andererseits an einem jeweiligen axialen Ende des Gleitlagers 62 abstützen. Die Rückstellfedern 64 sind dazu eingerichtet, den Zusatzmassekörper 60 zu seiner Soll-Nullposition hin vorzuspannen, so dass der Zusatzmassekörper 60 bei einer etwaigen Auslenkung aus der Soll-Nullposition vermittels der Rückstellfedern 64 wieder zu seiner Soll-Nullposition hin gedrängt wird.

Figur 3 zeigt in einer der Figur 2a entsprechenden Perspektive einen entsprechenden Seitenschubrahmen 34 mit einer ebenfalls im Hohlraum 55 der unteren Querschiene 53 untergebrachten Einrichtung 54' zur Reduzierung von Schwingungen. Die Einrichtung 54' zur Reduzierung von Schwingungen in Figur 3 umfasst aktive Stellmittel zur Beeinflussung der Bewegung des Zusatzmassekörpers 60 relativ zum Seitenschubrahmen 34. Bei diesen Stellmitteln handelt es sich um Elektromagneten 65, die mittels einer (nicht gezeigten) Steuereinrichtung steuerbar sind, um den linear in der Lageranordnung 62 horizontal und quer zur normalen Hauptfahrtrichtung G des betreffenden Flurförderzeugs geführten Zusatzmassekörper 60 zu beschleunigen oder zu verzögern, wobei dieses beispielsweise in Abhängigkeit von Sensorinformationen über den Schwingungszustand des Hubgerüstes des betreffenden Flurförderzeugs in einer Schwingungen des Hubgerüstes dämpfenden Weise erfolgt. Die Lageranordnung 62 kann als reibungsarmes Gleitlager ausgestattet sein.

Anstelle einer Elektromagnetanordnung der in Figur 3 angedeuteten Art können als Stellmittel z.B. auch hydraulische Zylinder oder Elektromotoren in Frage kommen.

Figur 4 zeigt isoliert eine Tragstruktur 9 als Fahrerplatzträger eines Flurförderzeugs der in Figur 1 dargestellten Bauart. Ein damit ausgestattetes Flurförderzeug stellt insoweit ein weiteres Ausführungsbeispiel der Erfindung dar, als eine Einrichtung 54 zur Reduzierung von Schwingungen unterhalb der auf der Tragstruktur 9 abgestürzten Fahrerplatzplattform 11 im Bodenbereich des Fahrerplatzes vorzugsweise an der Tragstruktur 9 angeordnet ist. Die Einrichtung 54 ist im Beispielsfall ein passives System wie es auch in Figur 2a dargestellt ist. In der Einbaulage gemäß Figur 4 könnte ebenso gut auch ein aktives Schwingungsdämpfungssystem untergebracht sein, wie dies in Figur 3 gezeigt ist.

Es sei darauf hingewiesen, dass ein Flurförderzeug nach der Erfindung mehrere Einrichtungen 54 zur Reduzierung von Schwingungen aufweisen kann, wobei diese Einrichtungen 54 an unterschiedlichen Stellen, etwa wie in den Ausführungsbeispielen dargelegt, untergebracht sein können. Dabei kann es sich um aktive oder/und passive Schwingungsreduzierungssysteme handeln.

## Patentansprüche

1. Flurförderzeug mit einem Chassis (6), einem an dem Chassis (6) in aufrechter Position angeordneten Hubgerüst (8), einer Lasttragvorrichtung (36), welche wenigstens ein Lastaufnahmemittel (42) zur Aufnahme einer zu transportierenden Last aufweist, einer die Lasttragvorrichtung (36) an dem Hubgerüst (8) abstützenden und gemeinsam mit der Lasttragvorrichtung (36) an dem Hubgerüst (8) auf- und abwärts bewegbaren Tragstruktur (9), und mit einer Einrichtung (54; 54') zur Reduzierung von Schwingungen, wobei die Einrichtung (54; 54') zur Reduzierung von Schwingungen wenigstens einen vom Hubgerüst (8) getragenen Zusatzmassekörper (60) aufweist, der weder mit dem Hubgerüst (8) noch mit der Tragstruktur (9) noch mit der Lasttragvorrichtung (36) stets starr gekoppelt ist, sondern vermittels einer Lageranordnung (62) derart beweglich gelagert ist, dass er in Reaktion auf Hubgerüstschwingungen, insbesondere solche mit horizontalen Schwingungskomponenten relativ zum Hubgerüst (8) bewegbar ist, um Hubgerüstschwingungen entgegenzuwirken,
**dadurch gekennzeichnet, dass** die den Zusatzmassekörper (60) relativ zum Hubgerüst (8) beweglich lagernde Lageranordnung (62) von der Tragstruktur (9) getragen - und mit dieser an dem Hubgerüst (8) auf-und abwärts bewegbar ist.

2. Flurförderzeug nach Anspruch 1, **dadurch gekennzeichnet, dass** die Einrichtung (54; 54') zur Reduzierung von Schwingungen ein die Bewegung des Zusatzmassekörpers (60) relativ zum Hubgerüst (8) beeinflussendes passives oder/und aktives Dämpfungssystem (64; 65) aufweist.

3. Flurförderzeug nach Anspruch 2, **dadurch gekennzeichnet, dass** das Dämpfungssystem eine Reibungsdämpfungsanordnung umfasst.

4. Flurförderzeug nach Anspruch 2 oder 3, **dadurch gekennzeichnet, dass** das Dämpfungssystem wenigstens einen hydraulischen oder/und pneumatischen Reibungsdämpfungszylinder umfasst.

5. Flurförderzeug nach wenigstens einem der Ansprüche 2 bis 4, **dadurch gekennzeichnet, dass** das Dämpfungssystem eine Federanordnung (64) umfasst.

6. Flurförderzeug nach Anspruch 5, **dadurch gekennzeichnet, dass** die Federanordnung wenigstens eine mechanische Feder (64) oder/ und eine hydropneumatische Speicheranordnung umfasst.

7. Flurförderzeug nach einem der Ansprüche 2 bis 6, **dadurch gekennzeichnet, dass** das Dämpfungssystem wenigstens eine aktive Komponente (65) umfasst, insbesondere wenigstens einen steuerbaren hydraulischen oder/und pneumatischen Zylinder oder/und wenigstens einen steuerbaren Elektromotor, vorzugsweise Servomotor, oder/und eine Elektromagnetanordnung, wobei die aktive Komponente (65) des Dämpfungssystems zwischen dem Zusatzmassekörper (60) und dem Hubgerüst (8) und den damit in Verbindung stehenden Komponenten unmittelbar oder mittelbar wirksam ist, um den Zusatzmassekörper in (60) einer Hubgerüstschwingungen reduzierenden Weise zu beaufschlagen.

8. Flurförderzeug nach einem der vorher gehenden Ansprüche, **dadurch gekennzeichnet, dass** die Lageranordnung (62) eine Linearlageranordnung ist, die eine horizontale Bewegung des Zusatzmassekörpers (60) quer zur normalen Hauptfahrtrichtung (G) des Flurförderzeugs ermöglicht.

9. Flurförderzeug nach einem der vorher gehenden Ansprüche, **dadurch gekennzeichnet, dass** die Lageranordnung eine Pendellageranordnung ist, die eine Pendelbewegung des Zusatzmassekörpers, insbesondere in einer Ebene quer zur normalen Hauptfahrtrichtung (G) des Flurförderzeugs ermöglicht.

10. Flurförderzeug nach einem der vorhergehenden Ansprüche, **dadurch gekennzeichnet, dass** die den Zusatzmassekörper (60) relativ zum Hubgerüst (8) beweglich lagernde Lageranordnung (62) unmittelbar an der Tragstruktur (9) oder/ und der Lasttragvorrichtung (36) angeordnet ist.

11. Flurförderzeug nach einem der vorhergehenden Ansprüche, **dadurch gekennzeichnet, dass** an der Tragstruktur (9) ein gemeinsam damit an dem Hubgerüst (8) auf- und abwärts bewegbarer Fahrerplatz (12) befestigt ist, wobei die den Zusatzmassekörper (60) relativ zum Hubgerüst (8) beweglich lagernde Lageranordnung (62) an dem Fahrerplatz (12), insbesondere am Fahrerplatzboden (11) angeordnet ist.

12. Flurförderzeug nach einem der vorher gehenden Ansprüche, **dadurch gekennzeichnet, dass** es als Seitenstapler, vorzugsweise als Dreiseitenstapler ausgebildet ist, wobei die Tragstruktur (9) einen Seitenschubrahmen (34) aufweist, an welchem ein mit der Lasttragvorrichtung (36) verbundenes Seitenschubgerät (38) zur gemeinsamen Bewegung mit der Lasttragvorrichtung (36) seitlich quer zur normalen Hauptfahrtrichtung (G) des Flurförderzeugs gelagert und mittels einer Seitenschubantriebsvorrichtung antreibbar ist, wobei die den Zusatzmassekörper (60) relativ zum Hubgerüst (8) beweglich lagernde Lageranordnung (62) an dem Seitenschubrahmen (34) angeordnet ist.

13. Flurförderzeug nach einem der vorhergehenden Ansprüche, **dadurch gekennzeichnet, dass** die Einrichtung (54; 54') zur Reduzierung von Schwingungen wahlweise aktivierbar und deaktivierbar ist.

14. Flurförderzeug nach Anspruch 13, **dadurch gekennzeichnet, dass** die Einrichtung (54; 54') zur Reduzierung von Schwingungen in Abhängigkeit vom jeweiligen Betriebszustand des Flurförderzeugs oder/und in Abhängigkeit vom Aufenthalt des Flurförderzeugs in bestimmten Umgebungen, z. B. in einem Schmalgang, automatisch aktivierbar bzw. deaktivierbar ist.

## Claims

1. Industrial truck having a chassis (6), a mast (8) arranged on the chassis (6) in an upright position, a load-carrying apparatus (36), which comprises at least one load-receiving means (42) for receiving a load to be transported, a support structure (9) which supports the load-carrying apparatus (36) on the mast (8) and is movable upwards and downwards on the mast (8) together with the load-carrying apparatus (36), and having a device (54; 54') for reducing vibrations, the device (54; 54') for reducing vibrations comprising at least one additional mass body (60) supported by the mast (8), which body is not constantly rigidly coupled to the mast (8) or to the support structure (9) or to the load-carrying apparatus (36), but instead is movably mounted by means of a bearing arrangement (62) such that it is movable relative to the mast (8) in response to mast vibrations, in particular those having horizontal vibration components, in order to counteract mast vibrations,
**characterised in that** the bearing arrangement (62) which mounts the additional mass body (60) so as to be movable relative to the mast (8) is supported by the support structure (9) and is movable upwards and downwards on the mast (8) together with said structure.

2. Industrial truck according to claim 1, **characterised in that** the device (54; 54') for reducing vibrations comprises a passive and/or active damping system (64; 55) which influences the movement of the additional mass body (60) relative to the mast (8).

3. Industrial truck according to claim 2, **characterised in that** the damping system comprises a friction damping arrangement.

4. Industrial truck according to either claim 2 or claim 3, **characterised in that** the damping system comprises at least one hydraulic and/or pneumatic friction-damping cylinder.

5. Industrial truck according to at least one of claims 2 to 4, **characterised in that** the damping system comprises a spring arrangement (64).

6. Industrial truck according to claim 5, **characterised in that** the spring arrangement comprises at least one mechanical spring (64) and/or a hydropneumatic accumulator arrangement.

7. Industrial truck according to any of claims 2 to 6, **characterised in that** the damping system comprises at least one active component (65), in particular at least one controllable hydraulic and/or pneumatic cylinder and/or at least one controllable electric motor, preferably a servomotor, and/or an electromagnet arrangement, the active component (65) of the damping system directly or indirectly operating between the additional mass body (60) and the mast (8) and the components connected thereto, in order to act on the additional mass body (60) in such a way as to reduce mast vibrations.

8. Industrial truck according to any of the preceding claims, **characterised in that** the bearing arrangement (62) is a linear bearing arrangement which allows horizontal movement of the additional mass body (60) transversely to the normal main direction of travel (G) of the industrial truck.

9. Industrial truck according to any of the preceding claims, **characterised in that** the bearing arrangement is a self-aligning bearing arrangement which allows a pendulum movement of the additional mass body, in particular in a plane that is transverse to the normal main direction of travel (G) of the industrial truck.

10. Industrial truck according to any of the preceding claims, **characterised in that** the bearing arrangement (62) which mounts the additional mass body (60) so as to be movable relative to the mast (8) is arranged directly on the support structure (9) and/or the load-carrying apparatus (36).

11. Industrial truck according to any of the preceding claims, **characterised in that** a cab (12) is fastened to the support structure (9) which is movable upwards and downwards on the mast (8) together with said structure, the bearing arrangement (62) which mounts the additional mass body (60) so as to be movable relative to the mast (8) being arranged on the cab (12), in particular on the cab floor (11).

12. Industrial truck according to any of the preceding claims, **characterised in that** it is designed as a side loader, preferably as a three-way side loader, the support structure (9) comprising a lateral push frame (34) on which a lateral push device (38), connected to the load-carrying apparatus (36), is mounted for common lateral movement with the load-carrying apparatus (36) transversely to the normal main direction of travel (G) of the industrial truck and can be driven by means of a lateral push drive apparatus, the bearing arrangement (62) which mounts the additional mass body (60) so as to be movable relative to the mast (8) being arranged on the side slide frame (34).

13. Industrial truck according to any of the preceding claims, **characterised in that** the device (54; 54') for reducing vibrations can be selectively activated and deactivated.

14. Industrial truck according to claim 13, **characterised in that** the device (54; 54') for reducing vibrations can be automatically activated and deactivated depending on the operating state of the industrial truck and/or depending on the industrial truck stopping in specific environments, e.g. in a narrow aisle.

## Revendications

1. Chariot de manutention avec un châssis (6), une armature de levage (8) disposée en position verticale au niveau du châssis (6), un dispositif porteur de charge (36), qui présente au moins un moyen de logement de charge (42) servant à loger une charge à transporter, une structure porteuse (9) soutenant le dispositif porteur de charge (36) au niveau de l'armature de levage (8) et pouvant être déplacée vers le haut et le bas conjointement avec le dispositif porteur de charge (36) au niveau de l'armature de levage (8), et avec un système (54 ; 54') servant à réduire des vibrations, dans lequel le système (54 ; 54') servant à réduire des vibrations présente au moins un corps de poids supplémentaire (60), supporté par l'armature de levage (8), qui n'est couplé en permanence de manière rigide ni avec l'armature de levage (8) ni avec la structure porteuse (9) ni avec le dispositif porteur de charge (36), mais est monté de manière mobile au moyen d'un ensemble de palier (62) de telle manière qu'il peut être déplacé par rapport à l'armature de levage (8), en réponse à des vibrations d'armature de levage, en particulier celles avec des composantes de vibration horizontales, pour contrecarrer des vibrations d'armature de levage, **caractérisé en ce que** l'ensemble de palier (62) supportant de manière mobile le corps de poids supplémentaire (60) par rapport à l'armature de levage (8) est supporté par la structure porteuse (9) et peut être déplacé vers le haut et vers le bas avec celle-ci au niveau de l'armature de levage (8).

2. Chariot de manutention selon la revendication 1, **caractérisé en ce que** le système (54 ; 54') servant à réduire des vibrations présente un système d'amortissement (64 ; 65) passif et/ou actif influençant le déplacement du corps de poids supplémentaire (60) par rapport à l'armature de levage (8).

3. Chariot de manutention selon la revendication 2, **caractérisé en ce que** le système d'amortissement comprend un ensemble d'amortissement par frottement.

4. Chariot de manutention selon la revendication 2 ou 3, **caractérisé en ce que** le système d'amortissement comprend au moins un cylindre d'amortissement par frottement hydraulique et/ou pneumatique.

5. Chariot de manutention selon au moins l'une quelconque des revendications 2 à 4, **caractérisé en ce que** le système d'amortissement comprend un ensemble de ressort (64).

6. Chariot de manutention selon la revendication 5, **caractérisé en ce que** l'ensemble de ressort comprend au moins un ressort mécanique (64) et/ou un ensemble accumulateur hydropneumatique.

7. Chariot de manutention selon l'une quelconque des revendications 2 à 6, **caractérisé en ce que** le système d'amortissement comprend au moins une composante active (65), en particulier au moins un vérin hydraulique et/ou pneumatique pouvant être commandé et/ou au moins un moteur électrique pouvant être commandé, de préférence un servomoteur et/ou un ensemble d'électroaimant, dans lequel la composante active (65) du système d'amortissement entre le corps de poids supplémentaire (60) et l'armature de levage (8) et les composantes reliées à celle-ci sont actives directement ou indirectement pour solliciter le corps de poids supplémentaire (60) d'une manière réduisant des vibrations d'armature de levage.

8. Chariot de manutention selon l'une quelconque des revendications précédentes, **caractérisé en ce que** l'ensemble de palier (62) est un ensemble de palier linéaire, qui permet un déplacement horizontal du corps de poids supplémentaire (60) de manière transversale par rapport à la direction de déplacement principale (G) normale du chariot de manutention.

9. Chariot de manutention selon l'une quelconque des revendications précédentes, **caractérisé en ce que** l'ensemble de palier est un ensemble de palier pendulaire, qui permet un déplacement pendulaire du corps de poids supplémentaire, en particulier dans un plan de manière transversale par rapport à la direction de déplacement principale (G) normale du chariot de manutention.

10. Chariot de manutention selon l'une quelconque des revendications précédentes, **caractérisé en ce que** l'ensemble de palier (62) supportant de manière mobile le corps de poids supplémentaire (60) par rapport à l'armature de levage (8) est disposé directement au niveau de la structure porteuse (9) et/ou du dispositif porteur de charge (36).

11. Chariot de manutention selon l'une quelconque des revendications précédentes, **caractérisé en ce qu'**un emplacement pour conducteur (12) pouvant être déplacé vers le haut et le bas au niveau de l'armature de levage (8) conjointement avec celui-ci est fixé au niveau de la structure porteuse (9), dans lequel l'ensemble de palier (62) supportant de manière mobile le corps de poids supplémentaire (60) par rapport à l'armature de levage (8) est disposé au niveau de l'emplacement pour conducteur (12), en particulier au niveau du sol d'emplacement pour conducteur (11).

12. Chariot de manutention selon l'une quelconque des revendications précédentes, **caractérisé en ce qu'**il est réalisé sous la forme d'un chariot élévateur latéral, de préférence sous la forme d'un chariot élévateur à trois côtés, dans lequel la structure porteuse (9) présente un cadre de poussée latérale (34), au niveau duquel un appareil de poussée latérale (38), relié au dispositif porteur de charge (36), destiné à être déplacé conjointement avec le dispositif porteur de charge (36) est monté sur le côté de manière transversale par rapport à la direction de déplacement principale (G) du chariot de manutention et peut être entraîné au moyen d'un dispositif d'entraînement de poussée latérale, dans lequel l'ensemble de palier (62) supportant de manière mobile le corps de poids supplémentaire (60) par rapport à l'armature de levage (8) est disposé au niveau du cadre de poussée latérale (34).

13. Chariot de manutention selon l'une quelconque des revendications précédentes, **caractérisé en ce que** le système (54 ; 54') servant à réduire des vibrations peut être sélectivement activé et désactivé.

14. Chariot de manutention selon la revendication 13, **caractérisé en ce que** le système (54 ; 54') servant à réduire des vibrations peut être automatiquement activé ou désactivé en fonction de l'état de fonctionnement respectif du chariot de manutention et/ou en fonction du séjour du chariot de manutention dans des environnements définis, par exemple sur une allée étroite.
